# EUROPEAN PATENT APPLICATION

(11) **EP 4 350 051 A1**
(43) Date of publication of application: **10.04.2024**
(21) Application number: 22833157.5
(22) Date of filing: 28.06.2022
(51) Int. Cl.: C25B 9/00, C01B 3/02, C02F 1/461, C25B 1/04, C25B 9/21, C25B 9/23, C25B 15/029, C25B 15/031

(54) **ELECTROLYTIC DEVICE**

(30) Priority: 30.06.2021 JP 2021109275
(71) Applicant: Mitsubishi Heavy Industries, Ltd., Tokyo 100-8332 (JP)
(72) Inventor: TAGAMI, Naoto, Tokyo 100-8332 (JP); TAJIMA, Hidehiko, Tokyo 100-8332 (JP); FURUKAWA, Shoichi, Tokyo 100-8332 (JP); MUKAI, Daisuke, Tokyo 100-8332 (JP); KAKO, Hiroshi, Tokyo 100-8332 (JP); SUKENOBU, Takahiro, Tokyo 100-8332 (JP)
(74) Representative: Studio Torta S.p.A.
(86) International application number: PCT/JP2022/025746
(87) International publication number: WO 2023/277010

(57) **Abstract**

An electrolytic device includes: an electrolytic tank; an ion exchange membrane configured to partition the electrolytic tank into a cathode chamber and an anode chamber; a catholyte supply unit configured to supply an electrolytic solution serving as a catholyte to the cathode chamber; a catholyte discharge unit configured to discharge the catholyte from the cathode chamber; an anolyte supply unit configured to supply an electrolytic solution serving as an anolyte to the anode chamber; an anolyte discharge unit configured to discharge the anolyte from the anode chamber; a cathode provided on a surface of the ion exchange membrane on the cathode chamber side; an anode provided on a surface of the ion exchange membrane on the anode chamber side; a cathode side power feeder provided in the cathode chamber and configured to supply electric power to the cathode; and an anode side power feeder provided in the anode chamber and configured to supply electric power to the anode. A pH of the catholyte is lower than a pH of the anolyte.

## Description

### Technical Field

The present disclosure relates to an electrolytic device.

This application claims priority based on Japanese Patent Application No. 2021-109275 filed in Japan on June 30, 2021, the contents of which are incorporated herein.

### Background Art

As a device for producing hydrogen, a device for electrolyzing water (an electrolytic device) is known. An example of a device of this type is indicated in Patent Document 1 listed below. In this device, an electrolytic tank partitioned into a cathode chamber and an anode chamber by an ion exchange membrane is filled with water, and electric power is supplied to the cathode and the anode to electrolyze the water. In the cathode chamber, hydrogen is produced by a reaction between water and electrons. Hydroxide ions produced by this reaction pass through the ion exchange membrane and reach the anode chamber. In the anode chamber, oxygen and water are produced from the hydroxide ions. It is believed that a large amount of hydrogen can be obtained by continuing such a reaction.

### Citation List

### Patent Literature

Patent Document 1: WO 2017/069083

### Summary of Invention

### Technical Problem

In the above-described electrolytic device, the anode and the cathode differ in terms of optimum pH. Specifically, at the anode, the electrolysis performance increases as the pH increases, and at the cathode, the electrolysis performance increases as the pH decreases. Therefore, when water having the same pH is supplied to the anode chamber and the cathode chamber as in the device according to Patent Document 1, the electrolysis performance of either the anode or the cathode may deteriorate. As a result, the energy efficiency of the electrolytic device may be affected.

The present disclosure has been made to solve the problem described above, and an object thereof is to provide an electrolytic device capable of producing hydrogen more efficiently.

### Solution to Problem

In order to solve the above-described problem, an electrolytic device according to the present disclosure includes: an electrolytic tank; an ion exchange membrane configured to partition the electrolytic tank into a cathode chamber and an anode chamber; a catholyte supply unit configured to supply an electrolytic solution serving as a catholyte to the cathode chamber; a catholyte discharge unit configured to discharge the catholyte from the cathode chamber; an anolyte supply unit configured to supply an electrolytic solution serving as an anolyte to the anode chamber; an anolyte discharge unit configured to discharge the anolyte from the anode chamber; a cathode provided on a surface of the ion exchange membrane on the cathode chamber side; an anode provided on a surface of the ion exchange membrane on the anode chamber side; a cathode side power feeder provided in the cathode chamber and configured to supply electric power to the cathode; and an anode side power feeder provided in the anode chamber and configured to supply electric power to the anode. A pH of the catholyte is lower than a pH of the anolyte.

### Advantageous Effects of Invention

According to the present disclosure, an electrolytic device capable of producing hydrogen more efficiently can be provided.

### Brief Description of Drawings

FIG. 1 is a diagram illustrating a configuration of an electrolytic system according to a first embodiment of the present disclosure.
FIG. 2 is a cross-sectional view illustrating a configuration of an electrolytic device according to the first embodiment of the present disclosure.
FIG. 3 is a cross-sectional view illustrating a configuration of an electrolytic system according to a second embodiment of the present disclosure.
FIG. 4 is a cross-sectional view illustrating a configuration of an electrolytic system according to a third embodiment of the present disclosure.
FIG. 5 is a table showing test conditions of Examples and a Comparative Example according to the embodiments of the present disclosure.
FIG. 6 is a graph showing ohmic loss correction values of electrolytic voltage measurement results in the Examples and Comparative Example according to the embodiments of the present disclosure.
FIG. 7 is a table showing test conditions of Comparative Examples.
FIG. 8 is a graph showing ohmic loss correction values of electrolytic voltage measurement results in the Comparative Examples.

### Description of Embodiments

### First Embodiment

### Configuration of Electrolytic System

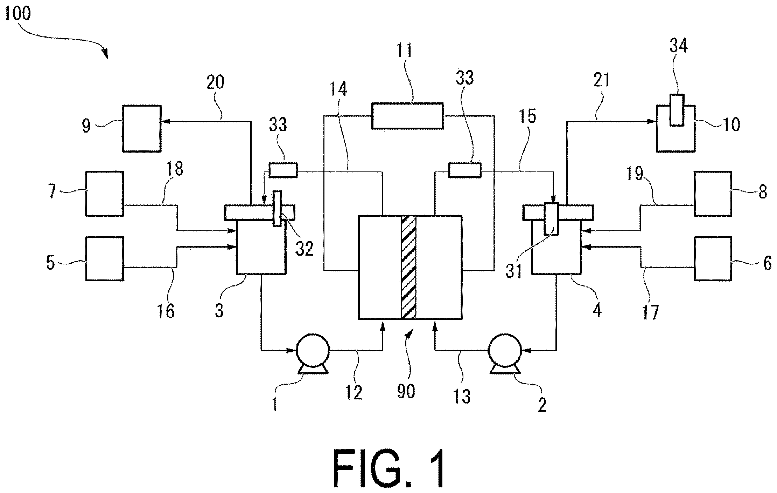

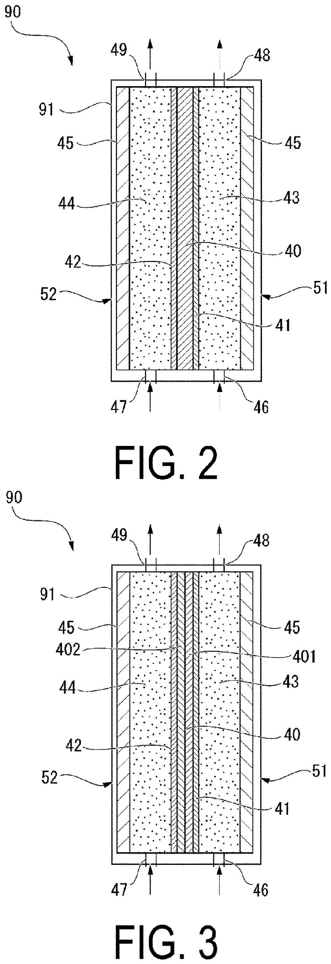

Hereinafter, an electrolytic system 100 and an electrolytic device 90 according to a first embodiment of the present disclosure will be described with reference to FIGS. 1 and 2. As illustrated in FIG. 1, the electrolytic system 100 includes an electrolytic device 90, a cathode side pump 1, an anode side pump 2, a cathode side tank 3, an anode side tank 4, chemical tanks 5 and 6, feedwater tanks 7 and 8, a cathode side gas storage unit 9, an anode side gas storage unit 10, a power supply device 11, a cathode side supply line 12, an anode side supply line 13, a cathode side discharge line 14, an anode side discharge line 15, chemical lines 16 and 17, feedwater lines 18 and 19, a cathode side gas discharge line 20, an anode side gas discharge line 21, pH measuring units 31 and 32, and hydrogen gas detecting units 33 and 34.

A supply side of the electrolytic device 90 and the cathode side tank 3 are connected by the cathode side supply line 12. The cathode side pump 1 is provided on the cathode side supply line 12. As will be described in detail later, an aqueous solution having an adjusted pH is stored as a catholyte in the cathode side tank 3. The catholyte is supplied to the electrolytic device 90 by driving the cathode side pump 1.

A discharge side of the electrolytic device 90 and the cathode side tank 3 are connected by the cathode side discharge line 14. The catholyte discharged from the electrolytic device 90 is collected by the cathode side discharge line 14 and returns to the cathode side tank 3. The cathode side tank 3 also functions as a gas-liquid separation device. When the catholyte contains gas generated by an electrolytic reaction, gas-liquid separation is performed in the cathode side tank 3, and only the liquid component is stored.

The chemical tank 5 is connected to the cathode side tank 3 via the chemical line 16. In the chemical tank 5, a chemical solution (at least one substance selected from the group including alkali metal hydroxides (LiOH, NaOH, KOH, RbOH, and CsOH), tetraalkylammonium hydroxides (N(CH₃)₄OH and N(C₂H₅)₄OH), carbonates (KHCO₃ and K₂CO₃), and alkaline earth metal hydroxides (Ca(OH)₂ and Mg(OH)₂) necessary for producing the catholyte is stored. A pH buffer can also be stored in the chemical tank 5. Specifically, the pH buffer contains from 1 ppm to 10 mol/L of at least one or more substances selected from KHCO₃, K₂CO₃, phosphoric acid, boric acid, tris H₂NC(CH₂OH)₃ (tris(hydroxymethyl)aminomethane), HEPES [2-[4-(2-hydroxyethyl)-1-piperazinyl]ethane sulfonic acid, and citric acid.

Further, the feedwater tank 7 is connected to the cathode side tank 3 via the feedwater line 18. Water (at least one substance selected from the group including ultrapure water, pure water, ion-exchanged water, distilled water, industrial water, and filtered water) necessary for producing the catholyte is stored in the feedwater tank 7. The catholyte is composed of these substances, and a pH of the catholyte is appropriately adjusted from 5.0 to 15.0.

The cathode side gas storage unit 9 is connected to the cathode side tank 3 by the cathode side gas discharge line 20. The gas generated in the cathode side tank 3 is subjected to gas-liquid separation as described above and is stored in the cathode side gas storage unit 9 via the cathode side gas discharge line 20.

Similarly, the electrolytic device 90 and the anode side tank 4 are connected by the anode side supply line 13. The anode side pump 2 is provided on the anode side supply line 13. As will be described in detail later, an aqueous solution having a higher pH than that of the catholyte is stored as an anolyte in the anode side tank 4. The anolyte is supplied to the electrolytic device 90 by driving the anode side pump 2.

The discharge side of the electrolytic device 90 and the anode side tank 4 are connected by the anode side discharge line 15. The anolyte discharged from the electrolytic device 90 is collected by the anode side discharge line 15 and returns to the anode side tank 4. The anode side tank 4 also functions as a gas-liquid separation device. When the anolyte contains gas generated by an electrolytic reaction, gas-liquid separation is performed in the anode side tank 4, and only the liquid component is stored.

The chemical tank 6 is connected to the anode side tank 4 via the chemical line 17. In the chemical tank 6, a chemical solution (at least one substance selected from the group including alkali metal hydroxides (LiOH, NaOH, KOH, RbOH, and CsOH), tetraalkylammonium hydroxides (N(CH₃)₄OH and N(C₂H₅)₄OH), carbonates (KHCO₃ and K₂CO₃), and alkaline earth metal hydroxides (Ca(OH)₂ and Mg(OH)₂) necessary for producing the anolyte is stored. Further, the feedwater tank 8 is connected to the anode side tank 4 via the feedwater line 19. Water (at least one substance selected from the group including ultrapure water, pure water, ion-exchanged water, distilled water, industrial water, and filtered water) necessary for producing the anolyte is stored in the feedwater tank 8. The anolyte is composed of these substances, and a pH of the anolyte is appropriately adjusted to be higher than the pH of the catholyte described above.

The anode side gas storage unit 10 is connected to the anode side tank 4 by the anode side gas discharge line 21. The gas generated in the anode side tank 4 is subjected to gas-liquid separation as described above and is stored in the anode side gas storage unit 10 via the anode side gas discharge line 21.

The power supply device 11 supplies electric power to the cathode side (a cathode side power feeder 44 which will be described later) and the anode side (an anode side power feeder 43 which will be described later) of the electrolytic device 90. The power supply device 11 may also be provided with a control device for controlling an operation of the electrolytic system 100.

The anode side tank 4 includes the pH measuring unit 31. Although not illustrated in detail, the pH measuring unit 31 measures the pH of the anolyte stored in the anode side tank 4. An administrator or a control device judges whether the value of the pH is lower than the pH of the catholyte, and appropriately adjusts the amount of the chemical solution to be injected from the chemical tank 6. Similarly, the cathode side tank 3 may include the pH measuring unit 32. In this case, the administrator or the control device judges whether the pH of the catholyte is in the range from 5.0 to 15.0 by using the pH measuring unit 32.

The anode side discharge line 15 and the anode side gas storage unit 10 are provided with the hydrogen gas detecting units 33 and 34, respectively. The hydrogen gas detecting units 33 and 34 are provided to monitor hydrogen gas just in case the hydrogen gas is generated on the anode side. In a case where hydrogen gas is detected, a warning to that effect is issued to the administrator or control device. The hydrogen gas detecting unit may be provided together with the above-described pH measuring unit 31 in the anode side tank 4.

### Configuration of Electrolytic Device

Next, the configuration of the electrolytic device 90 will be described with reference to FIG. 2. As illustrated in FIG. 2, the electrolytic device 90 includes an electrolytic tank 91, an ion exchange membrane 40, an anode 41 (anode catalyst), a cathode 42 (cathode catalyst), the anode side power feeder 43, the cathode side power feeder 44, and a separator 45.

The ion exchange membrane 40 partitions the inside of the electrolytic tank 91 into the cathode chamber 52 side and the anode chamber 51 side. As the ion exchange membrane 40, an anion exchange membrane having monovalent anion selectivity or OH⁻ selectivity is most suitably used.

The anode 41 is provided on an anode side surface of the ion exchange membrane 40. The cathode 42 is provided on a cathode side surface. As the anode 41 and the cathode 42, for example, a material selected from transition metals such as iron, nickel, and cobalt, and noble metals such as platinum and iridium is appropriately used.

The anode side power feeder 43 is in contact with the anode 41. The cathode side power feeder 44 is in contact with the cathode 42. The anode side power feeder 43 and the cathode side power feeder 44 are porous power feeders. The anode side power feeder 43 and the cathode side power feeder 44 are composed of a plurality of electrically conductive wires combined to fill an interior space of the anode chamber 51 or the cathode chamber 52. For example, the anode side power feeder 43 and the cathode side power feeder 44 can be each formed from a plurality of meshes formed of wires combined in a lattice shape, and a plurality of wires connecting the meshes. The planar meshes are disposed in parallel with the anode 41 or the cathode 42, and the wires connecting the meshes extend in a direction orthogonal to the anode 41 or the cathode 42. Carbon paper or carbon felt can also be used as the anode side power feeder 43 and the cathode side power feeder 44.

The above-described anolyte is supplied to the anode chamber 51 via the anolyte supply unit 46. The above-described catholyte is supplied to the cathode chamber 52 via the catholyte supply unit 47. The anolyte and the catholyte are discharged to the outside via the anolyte discharge unit 48 and the catholyte discharge unit 49, respectively. The separator 45 is a metal plate provided to separate the adjacent electrolytic tanks from each other.

### Operational Effects

Subsequently, operations of the above-described electrolytic system 100 and the electrolytic device 90 will be described. When electric power is supplied to the anode 41 and the cathode 42 in a state where an aqueous solution flows into the cathode chamber 52 and the anode chamber 51, water in the cathode chamber 52 is electrolyzed. In the cathode chamber 52, a reaction represented by Formula (1) occurs as a forward reaction.

4H₂O + 4e⁻ → 2H₂ + 4OH⁻ (1)

That is, water (H₂O) is electrolyzed in the cathode chamber 52 to produce hydrogen (H2) and hydroxide ions (anions, OH⁻). In other words, water reacts with electrons (e⁻) supplied from the cathode side power feeder 44 to produce hydrogen. The hydrogen and water produced in the cathode chamber 52 are introduced into the cathode side tank 3 and subjected to gas-liquid separation. The hydroxide ions which are anions pass through the ion exchange membrane 40 and move to the anode chamber 51. In the anode chamber 51, a reaction represented by Formula (2) occurs as a forward reaction.

4OH⁻ → O₂ + 2H₂O + 4e⁻ (2)

That is, oxygen and water are produced from the hydroxide ions. The oxygen and water produced in the anode chamber 51 are introduced into the anode side tank 4 and subjected to gas-liquid separation.

In the electrolytic device 90 described above, the anode 41 (anode catalyst) and the cathode 42 (cathode catalyst) differ in terms of optimum pH. Specifically, at the anode 41, the electrolysis performance increases as the pH increases, and at the cathode 42, the electrolysis performance increases as the pH decreases. Therefore, when water having the same pH is supplied to the anode chamber 51 and the cathode chamber 52, the electrolysis performance of either the anode 41 or the cathode 42 may deteriorate. As a result, the energy efficiency of the electrolytic device 90 may be affected. Therefore, in the present embodiment, a configuration is adopted in which aqueous solutions having different pHs are supplied to the anode chamber 51 and the cathode chamber 52, respectively, as described above.

According to the above configuration, since the pH of the catholyte is lower than the pH of the anolyte, activation overvoltage is optimized in each of the cathode 42 and the anode 41. As a result, the electrolysis reaction is promoted at each electrode, and the performance of the electrolytic device 90 can be improved. In other words, the amount of hydrogen produced can be further increased.

In the electrolytic device 90 described above, the catholyte and the anolyte are aqueous solutions containing a substance A and a substance B. The substance A is at least one substance selected from the group including ultrapure water, pure water, ion-exchanged water, distilled water, industrial water, and filtered water, and the substance B is at least one substance selected from the group including alkali metal hydroxides (LiOH, NaOH, KOH, RbOH, and CsOH), tetraalkylammonium hydroxides (N(CH₃)₄OH and N(C₂H₅)₄OH), carbonates (KHCO₃ and K₂CO₃), and alkaline earth metal hydroxides (Ca(OH)₂ and Mg(OH)₂). It is also possible to adopt a configuration in which both the catholyte and the anolyte contain the substance A and the substance B. In this case, the concentration of the substance B contained in the catholyte is set to be lower than the concentration of the substance B contained in the anolyte.

According to the above configuration, an aqueous solution having an adjusted pH can be easily obtained at low cost. In addition, since not simple water but aqueous solutions are used, it is also possible to reduce the possibility of an alkali component being deposited on a surface of the ion exchange membrane 40. This makes it possible to stably operate the electrolytic device 90 for a longer period of time. In addition, the cost and time required for maintenance can be reduced.

Furthermore, in the above-described electrolytic device 90, the catholyte is an aqueous solution further containing a pH buffer having a pH buffering capacity.

According to the above configuration, since the catholyte contains the pH buffer, a sharp change in pH on the cathode chamber 52 side is suppressed, and operation of the electrolytic device 90 can be controlled more easily and stably.

In addition, in the above-described electrolytic device 90, the ion exchange membrane 40 is an anion exchange membrane having monovalent anion selectivity.

According to the above-described configuration, since the anion exchange membrane having monovalent anion selectivity is used, the amount of crossover from the cathode chamber 52 side to the anode chamber 51 side can be reduced. As a result, the electrolytic device 90 can be operated more stably for a longer period of time.

### Second Embodiment

### Configuration of Electrolytic Device

Next, a configuration of an electrolytic device 90 according to a second embodiment of the present disclosure will be described with reference to FIG. 3. The same components as those of the first embodiment are denoted by the same reference signs, and detailed description thereof will be omitted. As illustrated in FIG. 3, the electrolytic device 90 includes an electrolytic tank 91, an ion exchange membrane 40, an anode 41 (anode catalyst), a cathode 42 (cathode catalyst), an anode side power feeder 43, a cathode side power feeder 44, and a separator 45.

In FIG. 3, the ion exchange membrane 40 is a bipolar membrane in which an anion exchange membrane 401 having monovalent anion selectivity and a cation exchange membrane 402 having monovalent cation selectivity are bonded together, with the anion exchange membrane 401 disposed on the cathode chamber 52 side and the cation exchange membrane 402 disposed on the anode chamber 51 side. The ion exchange membrane 40 partitions the inside of the electrolytic tank 91 into the cathode chamber 52 side and the anode chamber 51 side.

The cathode 42 is provided on a cathode side surface of the anion exchange membrane 401. The anode 41 is provided on an anode side surface of the cation exchange membrane 402. As the anode 41 and the cathode 42, for example, a material selected from transition metals such as iron, nickel, and cobalt, and noble metals such as platinum and iridium is appropriately used.

The anode side power feeder 43 is in contact with the anode 41. The cathode side power feeder 44 is in contact with the cathode 42. The anode side power feeder 43 and the cathode side power feeder 44 are porous power feeders. The anode side power feeder 43 and the cathode side power feeder 44 are composed of a plurality of electrically conductive wires combined to fill an interior space of the anode chamber 51 or the cathode chamber 52. For example, the anode side power feeder 43 and the cathode side power feeder 44 can be each formed from a plurality of meshes formed of wires combined in a lattice shape, and a plurality of wires connecting the meshes. The planar meshes are disposed in parallel with the anode 41 or the cathode 42, and the wires connecting the meshes extend in a direction orthogonal to the anode 41 or the cathode 42. Carbon paper or carbon felt can also be used as the anode side power feeder 43 and the cathode side power feeder 44.

The above-described anolyte is supplied to the anode chamber 51 via the anolyte supply unit 46. The above-described catholyte is supplied to the cathode chamber 52 via the catholyte supply unit 47. The anolyte and the catholyte are discharged to the outside via the anolyte discharge unit 48 and the catholyte discharge unit 49, respectively. The separator 45 is a metal plate provided to separate the adjacent electrolytic tanks from each other.

### Operational Effects

Next, the operation of the electrolytic device 90 according to the present embodiment will be described. When electric power is supplied to the anode 41 and the cathode 42 in a state where an aqueous solution flows into the cathode chamber 52 and the anode chamber 51, water in the cathode chamber 52 is electrolyzed. In the cathode chamber 52, a reaction represented by Formula (3) occurs as a forward reaction.

4H₂O + 4e⁻ → 2H₂ + 4OH⁻ (3)

That is, water (H₂O) is electrolyzed in the cathode chamber 52 to produce hydrogen (H2) and hydroxide ions (anions, OH⁻). In other words, water reacts with electrons (e⁻) supplied from the cathode side power feeder 44 to produce hydrogen.

Here, when the anolyte becomes near neutral, a reaction represented by Formula (4) occurs as a main reaction in the anode chamber 51.

2H₂O → 4H⁺ + O₂ + 4e⁻ (4)

That is, water (H₂O) is electrolyzed in the anode chamber 51 to produce oxygen (O₂) and hydrogen ions (cations, H+).

Since current flows from the anode to the cathode, the hydroxide ions produced at the cathode move from the cathode chamber through the anion exchange membrane to the surface of the cation exchange membrane, and the hydrogen ions produced at the anode move from the anode chamber through the cation exchange membrane to the surface of the anion exchange membrane.

The hydroxide ions and hydrogen ions meeting at an interface between the cation exchange membrane and the anion exchange membrane are neutralized to produce water (H₂O), which moves to the anode chamber or the cathode chamber.

According to the above configuration, since the pH of the catholyte is lower than the pH of the anolyte, activation overvoltage is optimized in each of the cathode 42 and the anode 41.

Furthermore, the activation overvoltage is optimized in each of the cathode 42 and the anode 41 while suppressing an increase in pH of the catholyte and a decrease in pH of the anolyte.

As a result, the performance of the electrolytic device 90 can be improved.

### Third Embodiment

### Configuration of Electrolytic Device

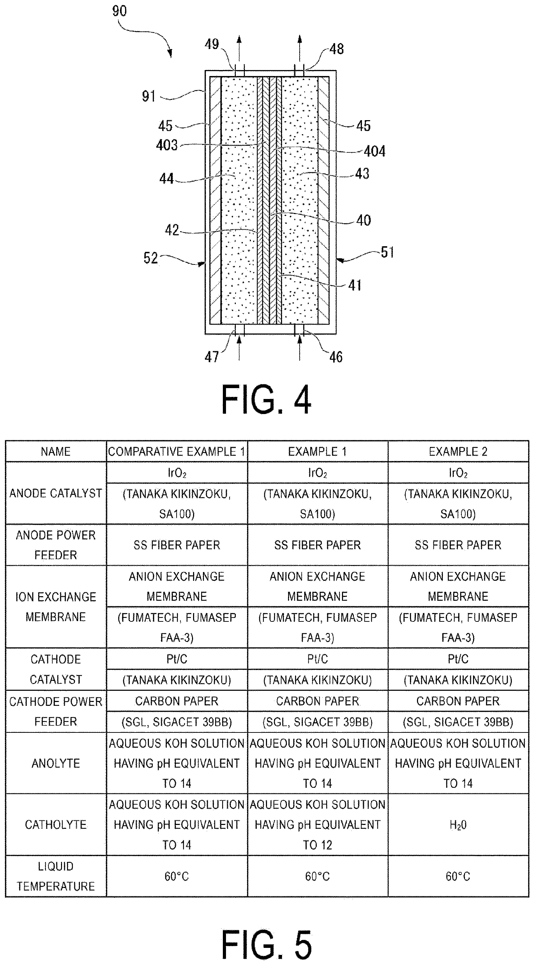

Next, a configuration of an electrolytic device 90 according to a third embodiment of the present disclosure will be described with reference to FIG. 4. The same components as those in each of the above-described embodiments will be denoted by the same reference signs, and a detailed description thereof will be omitted. As illustrated in FIG. 4, the electrolytic device 90 includes an electrolytic tank 91, an ion exchange membrane 40, an anode 41 (anode catalyst), a cathode 42 (cathode catalyst), an anode side power feeder 43, a cathode side power feeder 44, and a separator 45.

In FIG. 4, the ion exchange membrane 40 is a bipolar membrane in which a cation exchange membrane 403 having monovalent anion selectivity and an anion exchange membrane 404 having monovalent cation selectivity are bonded together, with the cation exchange membrane 403 disposed on the cathode chamber 52 side and the anion exchange membrane 404 disposed on the anode chamber 51 side. The ion exchange membrane 40 partitions the inside of the electrolytic tank 91 into the cathode chamber 52 side and the anode chamber 51 side.

The cathode 42 is provided on a cathode side surface of the cation exchange membrane 403. The anode 41 is provided on an anode side surface of the anion exchange membrane 404. As the anode 41 and the cathode 42, for example, a material selected from transition metals such as iron, nickel, and cobalt, and noble metals such as platinum and iridium is appropriately used.

The anode side power feeder 43 is in contact with the anode 41. The cathode side power feeder 44 is in contact with the cathode 42. The anode side power feeder 43 and the cathode side power feeder 44 are porous power feeders. The anode side power feeder 43 and the cathode side power feeder 44 are composed of a plurality of electrically conductive wires combined to fill an interior space of the anode chamber 51 or the cathode chamber 52. For example, the anode side power feeder 43 and the cathode side power feeder 44 can be each formed from a plurality of meshes formed of wires combined in a lattice shape, and a plurality of wires connecting the meshes. The planar meshes are disposed in parallel with the anode 41 or the cathode 42, and the wires connecting the meshes extend in a direction orthogonal to the anode 41 or the cathode 42. Carbon paper or carbon felt can also be used as the anode side power feeder 43 and the cathode side power feeder 44.

The above-described anolyte is supplied to the anode chamber 51 via the anolyte supply unit 46. The above-described catholyte is supplied to the cathode chamber 52 via the catholyte supply unit 47. The anolyte and the catholyte are discharged to the outside via the anolyte discharge unit 48 and the catholyte discharge unit 49, respectively. The separator 45 is a metal plate provided to separate the adjacent electrolytic tanks from each other.

### Operational Effects

Next, the operation of the electrolytic device 90 according to the present embodiment will be described. When electric power is supplied to the anode 41 and the cathode 42 in a state where an aqueous solution flows into the cathode chamber 52 and the anode chamber 51, water in the electrolytic tank is electrolyzed.

When electrolysis is performed in such a configuration, a phenomenon is known in which water (H₂O) inside the membrane is decomposed into hydrogen ions (H⁺) and hydroxide ions (OH-).

Since current flows from the anode to the cathode, the hydroxide ions produced inside the membrane move through the anion exchange membrane to the anode chamber, and the hydrogen ions produced inside the membrane move through the cation exchange membrane to the cathode chamber.

In the cathode chamber 52, a reaction represented by Formula (5) occurs as a main reaction of a neutral to acidic aqueous solution.

4H⁺ + 4e⁻ → 2H₂ (5)

That is, the hydrogen ions (H⁺) are electrolyzed in the cathode chamber 52 to produce hydrogen (H2) and hydrogen (H₂). In other words, the hydrogen ions react with electrons (e⁻) supplied from the cathode side power feeder 44 to produce hydrogen.

When the anolyte is alkaline, a reaction represented by Formula (6) occurs as a main reaction in the anode chamber 51.

4OH⁻ → O₂ + 2H₂O + 4e⁻ (6)

That is, oxygen and water are produced from the hydroxide ions.

According to the above configuration, since the pH of the catholyte is lower than the pH of the anolyte, activation overvoltage is optimized in each of the cathode 42 and the anode 41.

Furthermore, since H+ is supplied to the cathode chamber, a pH increase due to consumption of H+ in the cathode chamber is suppressed, and since OH-is supplied to the anode chamber, a pH decrease due to consumption of OH- in the anode chamber is suppressed, while the activation overvoltage is optimized in each of the cathode 42 and the anode 41.

As a result, the performance of the electrolytic device 90 can be improved.

### Other Embodiments

Embodiments according to the present disclosure have been described in detail with reference to the drawings. However, the specific configuration of the present disclosure is not limited to these embodiments. Design changes without departing from the main gist of the present disclosure or the like are also included.

### Examples

Next, Examples and Comparative Examples of the electrolytic device 90 according to the above embodiments will be described with reference to FIGS. 5 to 8.

The inventors conducted a test using the electrolytic device 90 under each condition shown in FIG. 5, and measured the electrolytic voltage under each condition. Specifically, Comparative Example 1 is different from the above-described embodiments and represents a case where the pH of an anolyte and the pH of a catholyte are equivalent. On the other hand, in Example 1, an aqueous potassium hydroxide (KOH) solution having a pH equivalent to 14 was used as the anolyte, and an aqueous KOH solution having a pH equivalent to 12 was used as the catholyte. In Example 2, an aqueous KOH solution having a pH equivalent to pH 14 was used as the anolyte, and H₂O (water) was used as the catholyte. In all examples, the test was conducted under the same conditions except for the properties of the anolyte and the catholyte. Specifically, iridium oxide (IrO₂) (SA100 available from Tanaka Kikinzoku K.K.) was used as an anode catalyst, and stainless steel FiberPaper was used as an anode power feeder. As an ion exchange membrane, an anion exchange membrane (Fumasep FAA-3 available from Fumatech) was used. Platinum-supported carbon (Pt/C available from Tanaka Kikinzoku K.K.) was used as a cathode catalyst, and carbon paper (SIGACET 39BB available from SGL) was used as a cathode power feeder. In all examples, the temperature of the liquid was 60°C.

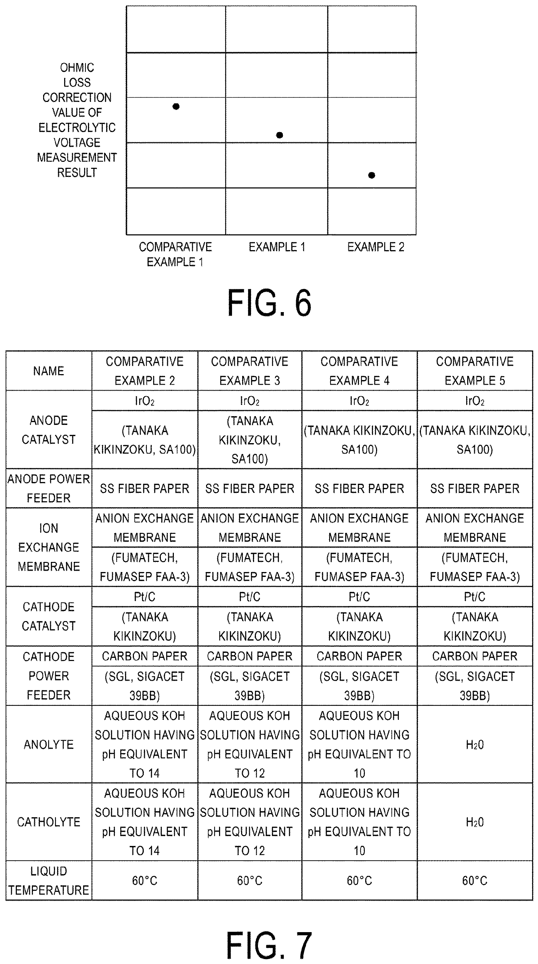

As a result of the above tests, as shown in FIG. 6, it was confirmed that both Examples 1 and 2 in which the pH of the catholyte was lower than the pH of the anolyte had a lower electrolytic voltage (ohmic loss correction value of the electrolytic voltage measurement result, the same applies hereinafter) and an improved electrolysis performance, as compared with Comparative Example 1 in which the pH of the anolyte and the pH of the catholyte were equivalent. In particular, comparison between Example 1 and Example 2 confirms that the lower the pH of the catholyte, the lower the electrolytic voltage and the more improved the electrolysis performance.

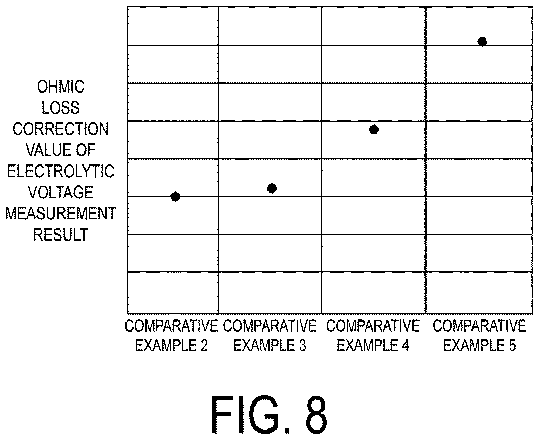

Furthermore, it was confirmed that Comparative Examples 2 to 5 representing cases where the pH of the anolyte and the pH of the catholyte were equivalent to each other as shown in FIGS. 7 and 8 showed a higher electrolytic voltage and a worse electrolysis performance, as compared with Examples 1 and 2. In Comparative Example 2, both the anolyte and the catholyte were aqueous KOH solutions having a pH equivalent to 14, and, in Comparative Example 3, both the anolyte and the catholyte were aqueous KOH solutions having a pH equivalent to 12. In Comparative Example 4, both the anolyte and the catholyte were aqueous KOH solutions having a pH equivalent to 10, and, in Comparative Example 5, they were both water (H₂O).

As described above, from the Examples and Comparative Examples, it was confirmed that the electrolysis performance of the electrolytic device 90 was improved and hydrogen could be produced more efficiently by adopting the configuration described in each of the embodiments described above.

### Supplementary Notes

The electrolytic device 90 according to each of the embodiments is understood as follows, for example.
(1) An electrolytic device 90 according to a first aspect includes: an electrolytic tank; an ion exchange membrane 40 configured to partition the electrolytic tank into a cathode chamber 52 and an anode chamber 51; a catholyte supply unit 47 configured to supply an electrolytic solution serving as a catholyte to the cathode chamber 52; a catholyte discharge unit 49 configured to discharge the catholyte from the cathode chamber 52; an anolyte supply unit 46 configured to supply an electrolytic solution serving as an anolyte to the anode chamber 51; an anolyte discharge unit 48 configured to discharge the anolyte from the anode chamber 51; a cathode 42 provided on a surface of the ion exchange membrane 40 on the cathode chamber 52 side; an anode 41 provided on a surface of the ion exchange membrane 40 on the anode chamber 51 side; a cathode side power feeder 44 provided in the cathode chamber 52 and configured to supply electric power to the cathode 42; and an anode side power feeder 43 provided in the anode chamber 51 and configured to supply electric power to the anode 41, in which a pH of the catholyte is lower than a pH of the anolyte.
   According to the above configuration, since the pH of the catholyte is lower than the pH of the anolyte, activation overvoltage is optimized in each of the cathode 42 and the anode 41. As a result, the performance of the electrolytic device 90 can be improved.
(2) An electrolytic device 90 according to a second aspect is the electrolytic device 90 according to (1), in which the catholyte is an aqueous solution containing a substance A, and the anolyte is an aqueous solution containing the substance A and a substance B, provided that the substance A is at least one substance selected from the group including ultrapure water, pure water, ion-exchanged water, distilled water, industrial water, and filtered water, and that the substance B is at least one substance selected from the group including alkali metal hydroxides (LiOH, NaOH, KOH, RbOH, and CsOH), tetraalkylammonium hydroxides (N(CH₃)₄OH and N(C₂H₅)₄OH), carbonates (KHCO₃ and K₂CO₃), and alkaline earth metal hydroxides (Ca(OH)₂ and Mg(OH)₂).
   According to the above configuration, an aqueous solution having an adjusted pH can be easily obtained at low cost. In addition, since aqueous solutions are used, it is also possible to reduce the possibility of an alkali component being deposited on a surface of the ion exchange membrane 40.
(3) An electrolytic device 90 according to a third aspect is the electrolytic device 90 according to (2), in which the catholyte is an aqueous solution containing the substance A and the substance B, and the anolyte is an aqueous solution containing the substance A and the substance B, and a concentration of the substance B contained in the catholyte is lower than a concentration of the substance B contained in the anolyte.
(4) An electrolytic device 90 according to a fourth aspect is the electrolytic device 90 according to (2), in which the anolyte is an aqueous solution containing the substance A and the substance B, and the catholyte is an aqueous solution containing a pH buffer having a pH buffering capacity.
   According to the above configuration, since the catholyte contains the pH buffer, a sharp change in pH is suppressed and the operation of the electrolytic device 90 can be controlled more easily and stably.
(5) An electrolytic device 90 according to a fifth aspect is the electrolytic device 90 according to (4), in which the pH buffer contains from 1 × 10⁻⁶ mol/L to 10 mol/L of at least one or more substances selected from KHCO₃, K₂CO₃, phosphoric acid, boric acid, tris H₂NC(CH₂OH)₃ (tris(hydroxymethyl)aminomethane), HEPES [2-[4-(2-hydroxyethyl)-1-piperazinyl]ethane sulfonic acid, and citric acid.
(6) An electrolytic device 90 according to a sixth aspect is the electrolytic device 90 according to any one of (1) to (5), in which the ion exchange membrane 40 is an anion exchange membrane having monovalent anion selectivity.
   According to the above-described configuration, since the anion exchange membrane having monovalent anion selectivity is used, the amount of crossover from the cathode chamber 52 side to the anode chamber 51 side can be reduced.
(7) An electrolytic device 90 according to a seventh aspect is the electrolytic device 90 according to any one of (1) to (5), in which the ion exchange membrane is a bipolar membrane in which an anion exchange membrane having monovalent anion selectivity and a cation exchange membrane having monovalent cation selectivity are bonded to each other, and the anion exchange membrane is disposed on the cathode chamber side, and the cation exchange membrane is disposed on the anode chamber side.
(8) An electrolytic device 90 according to an eighth aspect is the electrolytic device 90 according to any one of (1) to (5), in which the ion exchange membrane is a bipolar membrane in which an anion exchange membrane having monovalent anion selectivity and a cation exchange membrane having monovalent cation selectivity are bonded to each other, and the anion exchange membrane is disposed in the anode chamber, and the cation exchange membrane is disposed on the cathode chamber side.
(9) An electrolytic device 90 according to a ninth aspect is the electrolytic device 90 according to (7) or (8), in which the anion exchange membrane is an anion exchange membrane having OH- conductivity, and the cation exchange membrane is a proton exchange membrane having proton conductivity.

### Industrial Applicability

According to the present disclosure, an electrolytic device capable of producing hydrogen more efficiently can be provided.

### Reference Signs List

100 Electrolytic system
90 Electrolytic device
91 Electrolytic tank
1 Cathode side pump
2 Anode side pump
3 Cathode side tank
4 Anode side tank
5, 6 Chemical tank
7, 8 Feedwater tank
9 Cathode side gas storage unit
10 Anode side gas storage unit
11 Power supply device
12 Cathode side supply line
13 Anode side supply line
14 Cathode side discharge line
15 Anode side discharge line
16, 17 Chemical line
18, 19 Feedwater line
20 Cathode side gas discharge line
21 Anode side gas discharge line
31, 32 pH measuring unit
33, 34 Hydrogen gas detecting unit
40 Ion exchange membrane
41 Anode (anode catalyst)
42 Cathode (cathode catalyst)
43 Anode side power feeder
44 Cathode side power feeder
45 Separator
46 Anolyte supply unit
47 Catholyte supply unit
48 Anolyte discharge unit
49 Catholyte discharge unit
401, 404 Anion exchange membrane
402, 403 Cation exchange membrane

## Claims

1. An electrolytic device comprising:
an electrolytic tank;
an ion exchange membrane configured to partition the electrolytic tank into a cathode chamber and an anode chamber;
a catholyte supply unit configured to supply an electrolytic solution serving as a catholyte to the cathode chamber;
a catholyte discharge unit configured to discharge the catholyte from the cathode chamber;
an anolyte supply unit configured to supply an electrolytic solution serving as an anolyte to the anode chamber;
an anolyte discharge unit configured to discharge the anolyte from the anode chamber;
a cathode provided on a surface of the ion exchange membrane on the cathode chamber side;
an anode provided on a surface of the ion exchange membrane on the anode chamber side;
a cathode side power feeder provided in the cathode chamber and configured to supply electric power to the cathode; and
an anode side power feeder provided in the anode chamber and configured to supply electric power to the anode, wherein
a pH of the catholyte is lower than a pH of the anolyte.

2. The electrolytic device according to claim 1, wherein
the catholyte is an aqueous solution containing a substance A, and the anolyte is an aqueous solution containing the substance A and a substance B, provided that the substance A is at least one substance selected from the group including ultrapure water, pure water, ion-exchanged water, distilled water, industrial water, and filtered water, and that the substance B is at least one substance selected from the group including alkali metal hydroxides (LiOH, NaOH, KOH, RbOH, and CsOH), tetraalkylammonium hydroxides (N(CH₃)₄OH and N(C₂H₅)₄OH), carbonates (KHCO₃ and K₂CO₃), and alkaline earth metal hydroxides (Ca(OH)₂ and Mg(OH)₂).

3. The electrolytic device according to claim 2, wherein
the catholyte is an aqueous solution containing the substance A and the substance B, and the anolyte is an aqueous solution containing the substance A and the substance B, and
a concentration of the substance B contained in the catholyte is lower than a concentration of the substance B contained in the anolyte.

4. The electrolytic device according to claim 2, wherein
the anolyte is an aqueous solution containing the substance A and the substance B, and
the catholyte is an aqueous solution containing a pH buffer having a pH buffering capacity.

5. The electrolytic device according to claim 4, wherein
the pH buffer comprises:
from 1 × 10⁻⁶ mol/L to 10 mol/L of at least one or more substances selected from KHCOₑ, K₂CO₃, phosphoric acid, boric acid, tris H₂NC(CH₂OH)₃ (tris(hydroxymethyl)aminomethane), HEPES [2-[4-(2-hydroxyethyl)-1-piperazinyl]ethane sulfonic acid, and citric acid.

6. The electrolytic device according to any one of claims 1 to 5, wherein the ion exchange membrane is an anion exchange membrane having monovalent anion selectivity.

7. The electrolytic device according to any one of claims 1 to 5, wherein
the ion exchange membrane is a bipolar membrane in which an anion exchange membrane having monovalent anion selectivity and a cation exchange membrane having monovalent cation selectivity are bonded to each other, and
the anion exchange membrane is disposed on the cathode chamber side and the cation exchange membrane is disposed on the anode chamber side.

8. The electrolytic device according to any one of claims 1 to 5, wherein
the ion exchange membrane is a bipolar membrane in which an anion exchange membrane having monovalent anion selectivity and a cation exchange membrane having monovalent cation selectivity are bonded to each other, and
the anion exchange membrane is disposed on the anode chamber side and the cation exchange membrane is disposed on the cathode chamber side.

9. The electrolytic device according to claim 7 or 8, wherein
the anion exchange membrane is an anion exchange membrane having hydroxide ion conductivity, and
the cation exchange membrane is a proton exchange membrane having proton conductivity.
